# EUROPÄISCHE PATENTSCHRIFT

(11) **EP 1 795 735 B1**
(45) Veröffentlichungstag und Bekanntmachung des Hinweises auf die Patenterteilung: **22.04.2009**
(21) Anmeldenummer: 06125214.4
(22) Anmeldetag: 01.12.2006
(51) Int. Cl.: F02M 37/22, F02M 31/16, F16K 11/07, F16K 31/00

(54) **Regelmodul zur Mischung von Fluiden**
Regulating module for mixing fluids
Dispositif de régulation pour mélanger des fluides

(30) Priorität: 08.12.2005 DE 202005019318 U
(43) Veröffentlichungstag der Anmeldung: 13.06.2007
(73) Patentinhaber: MANN+HUMMEL GmbH, 71638 Ludwigsburg (DE)
(72) Erfinder: Schwarz, Holger, 70435 Stuttgart (DE); Piticco, Claudio, 74395 Mundelsheim (DE); Pfaff, Thomas, 71711 Murr (DE); Boylu, Bozkurt, 74343 Sachsenheim (DE)

(56) Entgegenhaltungen:
- EP-A1- 0 049 406
- WO-A-02/01061
- WO-A-97/26477
- US-A- 3 951 381
- US-A1- 2002 050 297

## Beschreibung

### Technisches Gebiet

Die Erfindung betrifft ein Regelmodul zur Mischung von Fluiden nach dem Oberbegriff des Anspruches 1. Außerdem betrifft die Erfindung ein Fluidsystem nach Anspruch 5.

### Stand der Technik

Es sind Kolben bekannt, welche in Bohrungen angeordnet sind. Die Kolben verfügen über Kolbenringe, welche die Leckage zwischen der Bohrungswand und dem Kolben verringern. Hierzu ist in dem Kolben eine Nut vorgesehen, in welche der Kolbenring eingebracht wird. Die Kolbenringe schmiegen sich an die Bohrungswand an und reduzieren so die Leckage. Diese Ausführung einer Kolben/Bohrungs-Paarung ist jedoch teuer und aufwendig in der Herstellung.

Bei anderen bekannten Ausgestaltungen ist der Kolben direkt in der Bohrung angeordnet. Hierbei treten, durch die Abweichungen bzw. Toleranzen der Paarungs-Partner, große Leckageströme auf. Um geringe Leckagen zu erreichen sind die Kolben und Bohrungen mit sehr kleinen Toleranzen zu fertigen. Durch die kleinen Toleranzen wird die Herstellung der Kolben/Bohrungs-Paarung jedoch sehr teuer.

So offenbart das Dokument WO02/01061 eine Steuereinheit in einem Flüssigkeitskreislauf, bei der die Kolben mit einer starren Kolbenlauffläche durch eine entsprechende Tolerierung gegen die Ventilaufnahme abgedichtet sind.

In der Schrift US3951381 Whitener ist ein Ventilblock gezeigt, bei dem die Kolbenlaufflächen der einzelnen Kolben durch separat in den Kolben eingelegte O-Ring Dichtungen gebildet werden.

Aufgabe der Erfindung ist es, ein Regelmodul mit einem Kolben zu schaffen, welches einerseits einfach und kostengünstig herstellbar ist und andererseits über geringe Leckageströme verfügt. Diese Aufgabe wird durch die Merkmale des Anspruches 1 gelöst.

### Offenbarung der Erfindung

Das erfindungsgemäße Regelmodul ist zur Mischung von Fluiden vorgesehen. Hierbei können sowohl gleiche Fluide mit unterschiedlichen Temperaturen, als auch verschiedene Fluide miteinander vermischt werden. Vorzugsweise kann das Regelmodul zur Mischung von Kraftstoffen mit unterschiedlichen Temperaturen in Kraftfahrzeugen verwendet werden. Hierzu verfügt das Regelmodul über ein Gehäuse mit einer Innenwand, welche einen Mischraum begrenzt. Der Mischraum kann über einen beliebigen Querschnitt verfügen. Vorzugsweise ist der Querschnitt kreisförmig oder oval ausgebildet, wobei der Querschnitt keine Ecken aufweist. Dies ist besonders vorteilhaft, da Ecken besonders aufwendig in der Abdichtung sind und durch die eckenlose Geometrie ein einfaches Abdichten möglicht ist. Das Gehäuse, welches auch mehrteilig ausgeführt sein kann, kann aus einem beliebigen Material z.B. Kunststoff oder Metall bestehen, welches durch das Fluid nicht angegriffen wird. In dem Gehäuse sind ein Fluideinlass, ein Fluidauslass und ein Fluidaustritt angeordnet. Jeder Fluideinlass, -auslass bzw. -austritt ist mit dem Mischraum korrespondierend verbunden. Entsprechend der Stellung eines Regelkolbens, welcher in dem Gehäuse angeordnet ist, ist der Fluideinlass mit dem Fluidauslass bzw. Fluidaustritt korrespondierend verbunden. Die Stellung des Regelkolbens ist durch eine Stelleinheit definierbar. Hierbei kann die Stelleinheit z.B. ein Wachsdehnelement sein, welches über eine Fluidtemperatur steuerbar ist. Andere Stelleinheiten können auch über die Fluidzusammensetzung steuerbar sein. Entsprechend einer gewünschten Fluidtemperatur bzw. Fluidmischung verschiebt das Stellelement den Regelkolben und bewirkt so ein zumindest teilweises Verschließen des Fluidauslasses oder Fluidaustritts.

Der Regelkolben verfügt über einen Kolben mit einer Kolbenlauffläche, welche mit der Innenwand des Gehäuses korrespondiert. Hierbei ist die Kolbenlauffläche elastisch ausgeführt, so dass sie sich an die Innenfläche des Gehäuses anschmiegt. Der gesamte Kolben mit der Kolbenlauffläche kann hierbei aus einem weichen, leicht zu verformenden Materialblock bestehen. Somit wird erreicht, dass die Kolbenfläche sich auch an geometrische Unebenheiten der Innenwand anschmiegt und so die Leckage zwischen der Innenwand und der Kolbenlauffläche reduziert. Hierbei ist die Herstellung einer elastischen Kolbenlauffläche kostengünstig realisierbar, da die Toleranzen relativ groß gewählt werden können. Durch die Elastizität passt sich die Kolbenlauffläche an die jeweilige Innenwand optimal an.

Gemäß einer weiteren Ausgestaltung der Erfindung ist die Kolbenlauffläche durch eine flexible Wand gebildet, wobei der Kolben selbst ausschließlich durch die Wand gebildet ist. Hierbei kann die Wandstärke je nachdem welches Material verwendet wurde, variieren. Bei besonderen Ausführungen kann die Wandstärke z. B. 0,3 mm bis 1 mm betragen. Da der Kolben durch eine dünne Wand gebildet ist, kann Material eingespart werden, wodurch das Regelmodul leichter und billiger wird.

Es ist vorteilhaft, dass die Kolbenlauffläche kegelförmig ausgebildet ist. Die Kolbenlauffläche verfügt über eine Linienberührung mit der Innenwand. Hierbei schmiegt sich die Kolbenlauffläche optimal an die Innenwand des Gehäuses an. Auch bei Unebenheiten verfügt die elastische Kolbenlauffläche über eine optimale Anlage an der Innenwand, wodurch die Leckage erheblich reduziert wird.

Bei einer besonderen Ausgestaltung der Erfindung verfügt der Regelkolben über zwei beabstandet angeordnete Kolbenlaufflächen. Hierbei sind die Kolbenlaufflächen derart angeordnet, dass durch die erste Kolbenlauffläche der Fluidauslass und durch die zweite Kolbenlauffläche der Fluidaustritt verschließbar ist. Somit ist eine exakte Fluidmischung erzeugbar.

Gemäß einer Weiterbildung der Erfindung sind die Kolbenlaufflächen mit ihren kleineren Querschnitten einander zugewandt angeordnet. Somit wird einerseits gewährleistet, dass die Stellkräfte für den Regelkolben in beide Richtungen etwa gleich sind. Andererseits wird die Fluidströmung von dem Fluideinlass zu dem Fluidauslass bzw. Fluidaustritt verbessert, da ein sanfter Übergang geschaffen ist.

Es ist vorteilhaft, dass der Regelkolben aus Kunststoff besteht. Der Regelkolben ist somit kostengünstig und einfach, z.B. im Spritzgussverfahren, herstellbar. Weiterhin verfügt Kunststoff über eine Grundelastizität, welche ein optimales Anschmiegen der Kolbenlauffläche an die Innenwand ermöglicht. Außerdem verfügt Kunststoff über Gleiteigenschaften, welche ein verschleißarmes Verstellen des Regelkolbens ermöglichen.

Das erfindungsgemäße Fluidsystem für ein Kraftfahrzeug verfügt neben dem oben beschriebenen Regelmodul über einen oder mehrere Fluidspeicher, einen Verbraucher und einen Fluidfilter. Durch das Fluidsystem kann die Fluidtemperatur entsprechend der geforderten, definierten Temperatur eingestellt werden. Hierbei werden Fluide mit unterschiedlichen Temperaturen vermischt, wobei das Regelmodul entsprechend der geforderten Temperatur das Fluid mit der anderen Temperatur dem anderen Fluid zuführt. Die Fluide mit unterschiedlichen Temperaturen können in unterschiedlichen Fluidspeichern bevorratet sein oder durch den Verbraucher bzw. ein gesondertes Bauteil entsprechend gekühlt bzw. erwärmt werden.

Ein der artiges Fluidsystem kann z.B. ein Kraftstoffsystem einer Brennkraftmaschine sein, welches über einen Kraftstofftank und einen Kraftstofffilter verfügt. In dem Kraftstofffilter wird der Kraftstoff gereinigt, bevor er der Brennkraftmaschine zugeführt wird. Bei tiefen Temperaturen kommt es zum Ausflocken von Paraffinen in Dieselkraftstoffen. Dies führt dazu, dass das Filtermedium verblockt und der Differenzdruck durch den Filter extrem ansteigt. Daher wird der kalte Kraftstoff mit warmem Kraftstoff vermischt, wodurch das Filterelement nicht verblockt.

### Kurze Beschreibung der Zeichnungen

Weitere Einzelheiten der Erfindung werden nachfolgend anhand der Figuren beschrieben. Hierbei zeigt:
Figur 1 ein Regelmodul im Schnitt und
Figur 2 ein Fluidsystem in schematischer Darstellung.

### Ausführungsform(en) der Erfindung

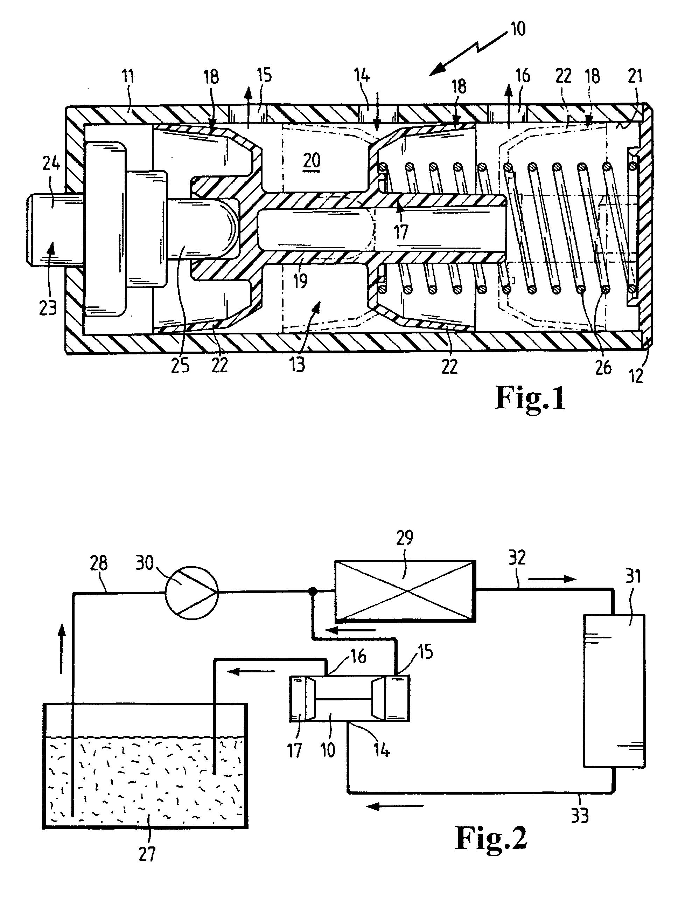

In Figur 1 ist ein Regelmodul 10 im Schnitt dargestellt. Das Regelmodul 10 verfügt über ein Gehäuse 11, welches aus Kunststoff besteht. Das Gehäuse 11 ist mit einem Deckel 12 verschlossen, wodurch in dem Gehäuse 11 ein Mischraum 13 begrenzt wird. Das Gehäuse 11 verfügt über einen Fluideinlass 14 einen Fluidauslass 15 und einen Fluidaustritt 16. Der Fluideinlass 14 ist mittig zwischen dem Fluidauslass 15 und dem Fluidaustritt 16 angeordnet. Jeder der Fluideinlässe bzw. - auslässe 14, 15, 16 ist mit einer entsprechenden Fluidleitung (nicht dargestellt) verbunden. In dem Mischraum 13 ist ein Regelkolben 17 angeordnet, welcher über zwei voneinander beabstandete Kolbenlaufflächen 18 verfügt. Der Regelkolben 17 ist als Kunststoffspritzgussteil ausgebildet, wodurch dieser einfach und kostengünstig herstellbar ist. Die Kolbenlaufflächen 18 sind über eine Kolbenstange 19 miteinander verbunden, wodurch zwischen den Kolbenlaufflächen 18 ein Durchströmungsbereich 20 eingeschlossen wird. Die Kolbenlaufflächen 18 sind elastisch ausgebildet, wobei sie über eine konische Form verfügen. Die sich verjüngenden Querschnitte sind einander zugewandt angeordnet. Die größten Querschnitte der Kolbenlaufflächen 18 liegen an einer Innenwand 21 des Gehäuses 11 dichtend an. Die Kolbenlaufflächen 18 sind durch eine dünne Wand 22 gebildet, wodurch die Kolbenlauffläche 18 unter Vorspannung in das Gehäuse 11 eingebracht ist. Durch die Vorspannung drückt sich die Kolbenlauffläche 18 an die Innenwand 21 des Gehäuses 11 elastisch an. Die Kolbenstange 19 ist mit einer Stelleinheit 23 verbunden, wobei die Stelleinheit 23 als Wachs-Dehn-Element ausgestaltet ist. Hierzu verfügt die Stelleinheit 23 über eine Temperaturerfassungseinheit 24 und eine Bewegungseinheit 25. Die Position der Bewegungseinheit 25 ist abhängig von der durch die Temperaturerfassungseinheit 24 erfassten Temperatur. Durch die Positionsveränderung der Bewegungseinheit 25 wird die Kolbenstange 19 und somit auch die Kolbenlaufflächen 18 bewegt. Damit der Regelkolben 17 in eine andere Position gebracht wird, in welche die Bewegungseinheit 25 keine Kraft aufbringt, ist eine Druckfeder 26 vorgesehen, welche der Bewegungseinheit 25 entgegen wirkt. Durch die Positionsänderung des Regelkolbens 17 wird entweder der Fluidauslass 15 oder der Fluidaustritt 16 geöffnet.

Kontaktiert die Temperaturerfassungseinheit 24 ein Fluid mit einer niedrigen Temperatur, so zieht sich das Wachs-Dehn-Element zusammen und die Bewegungseinheit 25 befindet sich in einer Endstellung. In dieser Endstellung drückt die Druckfeder 26 den Regelkolben 17 in seine Endstellung für kalte Fluide. In dieser Stellung ist der Fluideinlass 14 mit dem Fluidauslass 15 über den Durchströmungsbereich 20 korrespondierend verbunden. Das durch den Fluideinlass 14 eintretende Fluid wird zu dem Fluidauslass 15 geleitet, wobei zwischen der Kolbenlauffläche 18 und dem Fluidauslass 15 ein strömungsoptimierter Keil gebildet wird.

Sobald die Temperaturerfassungseinheit 24 mit einem warmen bzw. heißen Fluid in Kontakt kommt, dehnt sich das Wachs-Dehn-Element aus, und die Bewegungseinheit 25 drückt den Regelkolben 17 gegen die Druckfeder 26, wodurch diese komprimiert wird. In dieser Stellung (strichpunktiert dargestellt) trennt die linke Kolbenlauffläche 18 den Fluidauslass 15 von dem Fluideinlass 14. Die rechte Kolbenlauffläche 18 öffnet den Fluidaustritt 16, wodurch das Fluid von dem Fluideinlass 14 zu dem Fluidaustritt 16 strömen kann.

In Figur 2 ist ein Fluidsystem schematisch dargestellt. Das Fluidsystem verfügt über einen Fluidspeicher 27. Von dem Fluidspeicher 27 führt eine Fluidrohleitung 28 zu einem Fluidfilter 29. In der Fluidrohleitung 28 ist eine Pumpe 30 zum Transportieren des Fluids angeordnet. Weiterhin verfügt das Fluidsystem über einen Verbraucher 31 und über ein Regelmodul 10 gemäß Figur 1. Zwischen dem Fluidfilter 29 und dem Verbraucher 31 ist eine Fluidreinleitung 32 angeordnet. Zwischen dem Verbraucher 31 und dem Regelmodul 10 ist eine Fluidrückleitung 33 angeordnet, durch welche überschüssiges Fluid zu dem Regelmodul 10 gefördert wird. Durch den Fluideinlass 14 tritt das Fluid in das Regelmodul 10 ein. Das Regelmodul 10 ist über den Fluidauslass 15 mit dem Fluidfilter 29 verbunden. Der Fluidaustritt 16 ist mit dem Fluidspeicher 27 verbunden. Je nachdem welche Stellung der Regelkolben 17 in dem Regelmodul 10 einnimmt, wird das von dem Verbraucher 31 kommende Fluid dem Fluidfilter 29 oder dem Fluidspeicher 27 zugeführt.

## Patentansprüche

1. Regelmodul (10) zur Mischung von Fluiden, insbesondere in Kraftfahrzeugen, aufweisend ein Gehäuse (11), einen Regelkolben (17) und eine Stelleinheit (23),
- wobei das Gehäuse (11) über einen Fluideinlass (14), einen Fluidauslass (15), einen Fluidaustritt (16) und eine Innenwand (21) verfügt, wobei die Innenwand (21) zur Begrenzung eines Mischraumes (13) vorgesehen ist,
- wobei der Regelkolben (17) in dem Gehäuse (11) angeordnet ist und über eine Kolbenlauffläche (18) verfügt, welche mit der Innenwand (21) des Gehäuses (11) korrespondiert, und
- wobei der Regelkolben (17) mit der Stelleinheit (23) korrespondierend verbunden ist, wobei die Stellung des Regelkolbens (17) in dem Gehäuse (11) durch die Stelleinheit (23) veränderbar ist, wobei
die Kolbenlauffläche (18) elastisch ausgeführt ist, derart dass sich die Kolbenlauffläche (18) an die Innenwand (21) des Gehäuses (11) anlegt, **dadurch gekennzeichnet, dass** der Regelkolben (17) mit der Kolbenlauffläche (18) als Kunststoffspritzgussteil ausgebildet ist, wobei die Kolbenlauffläche (18) durch eine flexible Wand (22) gebildet ist.

2. Regelmodul (10) nach Anspruch 1, **dadurch gekennzeichnet, dass** die Kolbenlauffläche (18) kegelförmig ausgebildet ist.

3. Regelmodul (10) nach einem der vorangehenden Ansprüche, **dadurch gekennzeichnet, dass** der Regelkolben (17) über zwei beabstandete Kolbenlaufflächen (18) verfügt.

4. Regelmodul (10) nach Anspruch 2 und 3, **dadurch gekennzeichnet, dass** die Kolbenlaufflächen (18) mit ihren kleineren Querschnitten einander zugewandt angeordnet sind.

5. Fluidsystem eines Kraftfahrzeuges, insbesondere ein Kraftstoffsystem für eine Brennkraftmaschine, aufweisend zumindest einen Fluidspeicher (27), einen Verbraucher (31) und einen Fluidfilter (29), **dadurch gekennzeichnet, dass** ein Regelmodul (10) gemäß den Ansprüchen 1 bis 4 vorgesehen ist, um das Fluid zu temperieren.

## Claims

1. Regulator (10) for mixing fluids, in particular in motor vehicles, featuring a housing (11), a control piston (17) and a control unit (23),
- the housing (11) having a fluid inlet (14), a fluid outlet (15), a fluid discharge unit (16) and an internal wall (21), the internal wall (21) being intended for limiting a mixing chamber (13),
- t he control piston (17) being located in the housing (11) and having a piston contact surface (18) which is connected with the internal wall (21) of the housing (11), and
- the control piston (17) being correspondingly connected with the control unit (23), the position of the control piston (17) in the housing (11) being alterable by the control unit (23), the piston contact surface (18) being designed elastically in such a way that the piston contact surface (18) contacts the internal wall (21) of the housing **characterized in that** the control piston (17) with the piston contact surface (18) is designed as plastic injection molded part, the piston contact surface (18) being formed by a flexible wall (22).

2. Regulator (10) according to claim 1, **characterized in that** the piston contact surface (18) is designed in the shape of a cone.

3. Regulator (10) according to one of the above claims, **characterized in that** the control piston (17) has two spaced piston contact surfaces (18).

4. Regulator (10) according to claims 2 and 3, **characterized in that** the piston contact surfaces (18) face each other with their smaller cross sections.

5. Fluid system of a motor vehicle, in particular a fuel supply system for an internal combustion engine, featuring at least one fluid reservoir (27), one consumer (31) and one fluid filter (29), **characterized in that** a regulator (10) is provided for according to the claims 1 to 4 to bring the fluid to the right temperature.

## Revendications

1. Module de régulation (10) pour le mélange de fluides, notamment dans les véhicules automobiles, présentant un carter (11), un piston de régulation (17) et une unité de réglage (23),
- le carter (11) disposant d'une entrée de fluide (14), d'un écoulement de fluide (15), d'une sortie de fluide (16) et d'une paroi intérieure (21), la paroi intérieure (21) étant prévue afin de limiter une chambre de mélange (13),
- le piston de régulation (17) étant disposé dans le carter (11) et disposant d'une aire de déplacement du piston (18) qui est reliée à la paroi intérieure (21) du carter (11), et
- le piston de régulation (17) étant relié avec l'unité de réglage (23), la position du piston de régulation (17) pouvant être modifiée dans le carter (11) par l'unité de réglage (23), l'aire de déplacement du piston (18) étant réalisée de manière élastique de sorte que l'aire de déplacement du piston (18) touche la paroi intérieure (21) du carter (11), **caractérisé en ce que** le piston de régulation (17), avec l'aire de déplacement du piston (18), est réalisé comme pièce en plastique moulée par injection, l'aire de déplacement du piston (18) étant formée par une paroi flexible (22).

2. Module de régulation (10) selon la revendication 1, **caractérisé en ce que** l'aire de déplacement du piston (18) est réalisée sous forme de cône.

3. Module de régulation (10) selon l'une des revendications précédentes, **caractérisé en ce que** le piston de régulation (17) dispose de deux aires de déplacement du piston (18) disposées à une certaine distance.

4. Module de régulation (10) selon les revendications 2 et 3, **caractérisé en ce que** les petites sections des aires de déplacement du piston (18) sont orientées les unes vers les autres.

5. Système de fluide d'un véhicule automobile, notamment système de carburant pour un moteur à combustion interne, présentant au moins un réservoir de fluide (27), un consommateur (31) et un filtre à fluide (29), **caractérisé en ce qu'**un module de régulation (10) selon les revendications 1 à 4 est prévu pour tempérer le fluide.
